# EUROPEAN PATENT APPLICATION

(11) **EP 0 648 822 A1**
(43) Date of publication of application: **19.04.1995**
(21) Application number: 94116062.4
(22) Date of filing: 12.10.1994
(51) Int. Cl.: C09D 133/00, C08F 2/46, B05D 3/06

(54) **Radiation curable compositions and their use for coating a substrate**

(30) Priority: 14.10.1993 US 136558
(71) Applicant: SARTOMER COMPANY, INC., Exton, PA 19431 (US)
(72) Inventor: Cauffman, Timothy E., Ardmore, PA 19003 (US); Hazell, Thomas W., West Chester, PA 19380 (US); Ceska, Gary W., West Chester, PA 19380 (US)
(74) Representative: Chaillot, Geneviève

(57) **Abstract**

Radiation curable compositions having improved substrate adhesion, cured compositions, a method of adhering a radiation cured composition to a substrate, a method for providing a substrate with an adherent radiation cured coating or film, and substrates with coatings or films formed from a radiation curable composition are provided, wherein the composition comprises at least one radiation curable compound, a metal salt of an α,β-ethylenically unsaturated carboxylic acid and, optionally, a photoinitiator and/or a solvent.

## Description

This invention relates to radiation curable and cured compositions having improved adhesion to substrates.

Radiation cured acrylate monomers and oligomers generally adhere poorly to plastic, glass, paper, wood, metal, painted surfaces, leather, ceramic and textile substrates following cure. The poor adhesiveness of these monomers and oligomers to the substrates may be the result of shrinkage due to volume changes that occur during curing. The shrinkage may produce internal stresses that cause the monomers and oligomers to separate from the substrate.

As a result, adhesion of radiation cured acrylate monomers and oligomers to the aforementioned substrates is generally not achieved immediately after curing. Rather, a post-cure thermal bake cycle is conventionally used to overcome the internal stresses and promote adhesion. Use of higher molecular weight acrylates also has been used to improved adhesion, however it can result in diminished cure rates and soft films with less abrasion and chemical resistance due to decreased crosslink densities.

Thus, a need exists for radiation cured acrylate monomer and oligomer compositions with improved adhesion to substrates. Specifically, a need exists for radiation cured acrylate monomer and oligomer compositions in which improved adhesion to substrates is achieved without the need for a post-cure thermal bake cycle.

It has been discovered that improved adhesion to substrates may be achieved by incorporating a metal salt of an α,β-ethylenically unsaturated carboxylic acid into radiation curable compounds. Accordingly, the present invention pertains, among other things, to radiation curable, and cured, compositions comprising at least :
(a) a radiation curable compound ; and
(b) a metal salt of an α,β-ethylenically unsaturated carboxylic acid.

In another aspect, the invention pertains to a method for adhering a radiation cured composition to a substrate comprising the steps of:
(a) coating a substrate with a radiation curable composition comprising at least a radiation curable compound and a metal salt of an α,β-ethylenically unsaturated carboxylic acid ; and
(b) exposing the coated substrate to radiation to effect curing of the composition.

Yet in another aspect, the invention pertains to a substrate having, on at least one portion of its surface, a coating or film formed from the radiation cured formulation comprising at least :
(a) a radiation curable compound ;
(b) a metal salt of α,β-ethylenically unsaturated carboxylic acid.

The term "radiation cure", as used herein, is intended to include ultraviolet electron beam, infrared, and laser cure.

The term "substrate", as used herein, is intended to include plastic, glass, paper, wood, metal, painted surfaces, leather, ceramic, and textiles.

The term "radiation curable compound", as used herein, is intended to include, without limitation, radiation curable unsaturated monomers and oligomers used singly or in combination, such as monoacrylates and polyacrylates. Some representative acrylated monomers include 2-phenoxyethyl acrylate, caprolactone acrylate, isobornyl acrylate, hexanediol diacrylate and trimethylolpropane triacrylate. Representative acrylated oligomers include bisphenolic epoxy acrylates, aliphatic epoxy acrylates, aromatic urethane acrylates and aliphatic urethane acrylates.

Although the precise mechanism of the invention is not understood, it is believed that the metal of the metal salt may electrochemically interact with the substrate to provide an ionic bond which holds the radiation cured composition to the substrate. Further, the acrylate portion of the metal salt may react to become part of the radiation cured composition thereby contributing to improved adhesion.

The use of a reactive metal salt also may be advantageous in that blooming or migration is prevented. Nonreactive metal derivatives are known to migrate to the surface. However, the reactive metal derivatives of the present invention do not migrate, most likely because they are assumed to become a part of the polymer.

The α,β-ethylenically unsaturated carboxylic acid metal salts that may be used in the present invention have at least one carboxylic group ionically bonded to metals. The unsaturated carboxylic acid that may be used include acids such as acrylic and methacrylic acids.

The metal component of the unsaturated carboxylic acid metal salt may include, without limitation, magnesium, calcium, sodium, barium, titanium, molybdenum, iron, nickel, potassium, silver, cadmium, mercury, aluminium, lead, antimony, and zinc. The preferred metals are zinc, magnesium, calcium and aluminium. Zinc is particularly preferred because it provides the best adhesion and is less toxic in comparison to metals of higher molecular weights.

The metal may be incorporated into the radiation curable compound to achieve the composition of the present invention by admixing the radiation curable compound and the metal salt of the unsaturated carboxylic acid obtained by reacting the metal compound and the unsaturated carboxylic acid. Alternatively, the unsaturated carboxylic acid and the metal compound, i.e., metal oxide, metal hydroxide, metal carbonate and the like, may be admixed into the radiation curable compound and reacted in the mixture to form metal salts in situ.

The unsaturated carboxylic acid metal salts that may be used in the present invention correspond to the general structural formula shown below : 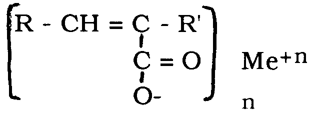
in which R and R' are independently selected from the group consisting of hydrogen, hydroxyl, alkyl, alkenyl, alkynl, aryl, aralkyl, and alkaryl, Me is a metal atom selected from the above-listed metals and n is an integer from 1 to 6. The preferred metal salt is zinc diacrylate.

The amount of the metal salt to be used in the present invention should be preferably an amount of from about 0.05 to about 25 percent by weight of the radiation curable composition, i.e. the total formulation. More preferably, amounts of from about 0.05 to about 5.0 percent by weight are used.

To reduce viscosity of the composition a solvent or a mixture of solvents may be used. If a solvent is used as a viscosity aid, it should be removed by evaporation prior to curing. The boiling point of the solvent should therefore be sufficiently low to facilitate removal. Exemplary solvents include lower alcohols such as methyl alcohol, ethyl alcohol, n-propyl alcohol, isopropyl and butyl alcohol, lower saturated esters such as ethyl acetate, butyl acetate and aromatics such as xylene and toluene. Additionally, water may be used as a solvent. The amount of solvent used is preferably from about 5 to about 25 percent by weight of the radiation-curable composition. One of ordinary skill in the art will be able to determine the preferred amount of solvent to be used based on the viscosity desired for the specific method being employed to apply the composition to a substrate.

The composition of the present invention may be cured by radiation cure. Preferably, the composition of the present invention is cured by ultraviolet or electron beam cure. Suitable ultraviolet curing radiation has wavelengths between about 200 and 800 nm, preferably between 250 and 450 nm.

If ultraviolet cure is used, one or more photoinitiators, or blends of initiators, may be added to the radiation-curable composition of the present invention. The choice of photoinitiator will depend on a variety of factors including, i.e. light source, presence and type of additives in the composition, and desired color of the product. However, there are no specific restrictions on the photoinitiator so long as the initiator is capable of generating free radicals by the absorption on optical energy.

Illustrative photoinitiators include 2-methylanthraquinone, 2-ethylanthraquinone, 2-chloroanthraquinone, 1 ,2-benzanthraquinone, 2-t-butylanthraquinone, 1,2-benzo-9,10-anthraquinone, benzil, benzoin, benzoin methyl ether, benzoin ethyl ether, benzoin isopropyl ether, alpha-methylbenzoin, alpha-phenylbenzoin, Michler's ketone, benzophenone, 4,4'-bis-(diethylamino) benzophenone, acetophenone, 2,2 diethoxyacetophenone, diethoxyphenylacetophenone, thioxanthone, diethyl thioxanthone, 1,5-acetonaphtalene, ethyl-p-dimethylaminobenzoate, benzil ketone, alpha hydroxy ketone, 2,4,6-trimethylbenzoyldiphenyl phosphinoxide, benzil ketal (2,2-dimethoxy-1,2-diphenylethanone) 1-hydroxycyclohexyl phenyl ketone, 2-methyl-1-[4-(methylthio) phenyl]-2-morpholinopropanone-1 and 2-hydroxy-2-methyl-1-phenyl-propan-1-one.

The amount of photoinitiator added should be an amount effective to initiate polymerization of the radiation curable composition on exposure to U.V. light. Preferably, the amount of photoinitiator used is from about 0.5 to about 15 percent by weight of the radiation curable composition, i.e. the total formulation. More preferably, amounts of from about 0.5 to about 5.0 percent by weight are used.

Alternatively, electron beam radiation cure may be preferably used. Any of the conventional sources of electron beam can be used such as van de Graaf-type, resonance transformer-type, linear-type, dynatron-type and high frequency-type. Electron beam having an energy of from about 50 to about 1000 KeV, preferably from about 100 to about 300 KeV discharged therefrom, may be irradiated in a dose of 0.1 to 100 MegaRads.

In general, the manner in which the components of the compositions of the present invention are mixed together is not important. If a photoinitiator is used, the photoinitiator may be dissolved in the radiation curable compound prior to the addition of the unsaturated carboxylic acid metal salt. The unsaturated carboxylic acid metal salt may be dispersed in the solvent or water prior to its addition to the radiation curable compound.

Without departing from the scope of the invention, and as appreciated by those skilled in the art, additives may be included in the methods and compositions of the invention. The particular additives used will depend on the physical characteristics desired. For example, plasticizers, stabilizers and pigments can be included herein. It is to be understood that any additive that does not deleteriously effect radiation cure of the composition can be used.

The radiation curable composition of the present invention are coated on a substrate using conventional coating techniques. For example, the composition may be applied to solid substrates by methods including, but not limited to, roller coating, flow coating, dip coating, spin coating, spray coating and curtain coating. The various methods allow the composition to be applied at variable thicknesses. The compositions are then radiation cured to form an adherent film or coating on the substrate.

The compositions of the present invention may be used as films and coatings, unpigmented and pigmented, adhesives and anticorrosion primers. Additional uses of the present invention include, but are not limited to, wire and cable coatings in which the coating must adhere to the wire. The compositions of the present invention also may be used in two and three piece can construction in which adhesion is critical due to post-forming operations required to make the finished can.

The testing procedure used for the results shown herein are as follows :

### ADHESION TEST I :

The composition was applied to untreated aluminium using a K2 bar to provide an approximately 25 µm thick coating. The composition was then UV cured by passing the sample under two conventional 8 watt/mm, medium pressure, mercury filled lamps at a conveyor speed of 3 m/min. Adhesion was measured by cross-hatch adhesion immediately after curing. A grid of 100 squares (each 6,3 mm) was cut on the coating. A strip of 3M 610® tape was pressed firmly down over the grid so as to ensure that no air was trapped between the coating and tape. The tape was withdrawn from the surface of the substrate with one rapid motion at about a 180° angle. The substrate was then observed. The percent adhesion loss was then calculated by dividing the total number of squares removed from the substrate by the original number of squares.

### ADHESION TEST II :

The composition was applied to untreated aluminium using a No. 4 draw-down bar to provide a 25 µm thick coating. The composition was then UV cured by passing the sample, five times, under one 12 watt/mm, medium pressure, mercury filled lamp at a conveyor speed of 76 cm/min. The adhesion measurement procedure of Adhesion Test I was repeated immediately after curing.

The invention will be further clarified by a consideration of the following examples, which are intended to be purely exemplary of the invention.

In the following examples, all amounts are expressed by weight, unless otherwise noted.

### EXAMPLE 1

To 38.5 g of a monofunctional urethane was added 6.0 g of benzil ketal available from CIBA-GEIGY under the tradename IRGACURE 651 and 2.0 g of 2,4,6-trimethylbenzoyldiphenyl phosphinoxide available from BASF WYANDOTTE under the tradename LUCIRIN. The benzil ketal and 2,4,6-trimethylbenzoyldiphenyl phosphinoxide were dissolved and 20 g of a urethane diacrylate having a polyether backbone available from SARTOMER under the tradename CN 980 warmed to 60°C was added slowly and the mixture blended using a high shear mixer. After the urethane diacrylate was fully dissolved and dispersed, 28.5 g of titanium dioxide available from SCM CHEMICALS under the tradename TIONA 472 was added and the mixture blended for 15 minutes at 2000 rpm on a high shear mixer. Using a Muller grinding block, 5.0 g of zinc diacrylate available from SARTOMER under the tradename SR-527 was added to about 1/3 of the mixture and ground for a total of 30 cycles. The material was removed from the grinding block and dispersed in the remaining mixture under low shear mixing conditions.

### EXAMPLE 2 (Comparative)

The procedure of example 1 was followed except that SR-527 was replaced by 5.0 g of an aromatic acid methacrylate available from SARTOMER under the tradename SR-674.

### EXAMPLE 3

The procedure of example 1 was followed except that CN 980 was replaced by 20.0 g of a urethane diacrylate having a polyester backbone available from SARTOMER under the tradename CN 960.

### EXAMPLE 4 (Comparative)

The procedure of example 2 was followed except that CN 980 was replaced by 20.0 g of a urethane diacrylate having a polyester backbone available from SARTOMER under the tradename CN 960.

The compositions of examples 1 to 4 were cured and tested according to Adhesion Test I. The results of the adhesion tests are reported in Table 1.

**TABLE 1**

| Example | Percent Adhesion Loss |
|---|---|
| 1 | 0 |
| 2 | 100 |
| 3 | 0 |
| 4 | 100 |

### EXAMPLE 5 (comparative)

Into a can, 28.0 g of isobornyl acrylate and 40.0 g of tridecyl acrylate were added. 2.0 g of 2,4,6-trimethylbenzoyldiphenyl phosphinoxide was added to the mixture and dissolved. 25.0 g of a mixture of 80 % urethane diacrylate blended with 20 % of ethoxylated trimethylolpropane triacrylate, available from SARTOMER under the tradename CN 963E80, was added and the mixture blended. After the CN 963E80 was fully dispersed, 5.0 g of a photoinitiator, being a blend of 70 % by weight of poly [2 hydroxy-2-methyl-1-4-(1-methyvinyl) phenyl] propan-1-one and 30 % by weight of 2-hydroxy-2-methyl-1-phenylpropan-1-one, was added and the mixture blended for 15 minutes.

### EXAMPLE 6

The composition was produced by repeating the procedure of example 5 except that 35.0 g of tridecyl acrylate was substituted for the 40.0 g of tridecyl acrylate of example 5. Additionally, after the mixture was blended for 15 minutes, 5.0 g of zinc diacrylate was added and dispersed using high speed Dispersmat mixing at 1000 rpm for 15 minutes.

The compositions of examples 5 and 6 were cured and tested as described for Adhesion Test II. The results of the tests are reported in Table 2.

**TABLE 2**

| Example | Percent Adhesion Loss |
|---|---|
| 5 | 100 |
| 6 | 0 |

## Claims

1. A radiation curable composition, comprising at least :
(a) a radiation curable compound ; and
(b) a metal salt of an α,β-ethylenically unsaturated carboxylic acid.

2. The composition of claim 1, wherein the α,β-ethylenically unsaturated carboxylic acid is selected from acrylic acid and methacrylic acid.

3. A composition according to claim 1 or claim 2, wherein the metal is selected from magnesium, calcium, sodium, barium, titanium, molybdenum, iron, nickel, potassium, silver, cadmium, mercury, aluminium, lead, antimony, and zinc.

4. A composition according to any of claims 1 to 3, wherein the metal salt of the α,β-ethylenically unsaturated carboxylic acid is present in an amount from 0.05 to 25 percent by weight of the radiation curable composition.

5. A composition according to any of claims 1 to 4, wherein the radiation curable compound is selected from radiation curable monoacrylates and polyacrylates.

6. A composition according to any of claims 1 to 5, further comprising a polymerization initiating-effective amount of a photoinitiator.

7. The composition of claim 6, wherein the photoinitiator is present in an amount from 0.5 to 15 percent by weight of the radiation curable composition.

8. A composition according to any of claims 1 to 7, further comprising at least a solvent.

9. The composition of claim 8, wherein the solvent includes water.

10. A composition according to claim 8 or claim 9, wherein the solvent is selected from lower alcohols, lower saturated esters and aromatics.

11. A composition according to any of claims 8 to 10, wherein the solvent is present in a viscosity reducing-effective amount.

12. A composition according to any of claims 8 to 10, wherein the solvent is present in an amount of 5 to 25 percent by weight of the radiation-curable composition.

13. A composition according to any of claims 1 to 12, wherein the metal salt of the α,β-ethylenically unsaturated carboxylic acid is formed in situ from an unsaturated carboxylic acid and a suitable reactive metal compound added separately to the composition.

14. A radiation cured composition provided by curing a composition according to any of claims 1 to 12.

15. A method for adhering a radiation cured composition to a substrate, comprising the steps of :
(a) coating a substrate with a radiation curable composition according to any of claims 1 to 13, and
(b) exposing the coated substrate to radiation to effect curing of the composition.

16. The method of claim 15, wherein the coated substrate is exposed to ultraviolet radiation to effect curing of the composition.

17. The method of claim 16, wherein the said ultraviolet radiation has wavelengths between 200 and 800 nm.

18. The method of claim 15, wherein the coated radiation curable composition is exposed to electron beam radiation to effect curing of the composition.

19. The method of claim 18, wherein the said electron beam radiation has an energy from 50 to 1000 KeV.

20. A substrate having a coating or film formed on at least one portion of its surface, the coating or film being formed from the radiation cured formulation of claim 14.
